(19) Europäisches Patentamt
European Patent Office
Office européen des brevets

(11) **EP 2 485 536 A1**

(12) **EUROPEAN PATENT APPLICATION**
published in accordance with Art. 153(4) EPC

(43) Date of publication:
08.08.2012 Bulletin 2012/32

(51) Int Cl.:
*H04W 48/00* (2009.01)

(21) Application number: **10791486.3**

(22) Date of filing: **13.06.2010**

(86) International application number:
**PCT/CN2010/073975**

(87) International publication number:
**WO 2010/148980 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.11.2009 CN 200910224825**

(71) Applicant: **ZTE Corporation**
**Shenzhen, Guangdong 518057 (CN)**

(72) Inventor: **DONG, Yuexin**
**Shenzhen**
**Guangdong 518057 (CN)**

(74) Representative: **Jansen, Cornelis Marinus et al**
**VEREENIGDE**
**Johan de Wittlaan 7**
**2517 JR Den Haag (NL)**

(54) **METHOD AND DEVICE FOR CONTROLLING DOWNLINK SERVICE ADMISSION**

(57) The present disclosure discloses a method and a device for downlink service admission control. The method includes: receiving an admission request message initiated by a downlink service, wherein the admission request message includes a service transmission rate of the downlink service (101); determining the number of Resource Blocks (RBs) required for performing the downlink service according to the service transmission rate of the downlink service (102); determining power required for performing the downlink service according to the number of the RBs required for performing the downlink service and a radio environment of a cell when the number of remaining downlink RBs of the cell is not less than the number of the RBs required for performing the downlink service (103); accessing the downlink service when remaining downlink power of the cell is not less than the power required for performing the downlink service (104). The present disclosure ensures an accurate admission judgment on a service to be accessed, even when scheduling of a Media Access Control (MAC) layer is insufficient. Consequently, the present disclosure ensures that transmission demands such as a bit error ratio and the like can be met after the service is admitted to the cell, thereby increasing system stability.

Fig. 1

101 Receiving an admission request message initiated by a downlink service, the admission request message includes a service transmission rate of the downlink service

102 According to the service transmission rate of the downlink service, determining the number of RBs required for performing the downlink service

103 Determining power required for performing the downlink service according to the number of RBs required for performing the downlink service and a radio environment of a cell when the number of remaining downlink RBs of the cell is not less than the number of RBs required for performing the downlink service

104 Accessing the downlink service when remaining downlink power of the cell is not less than the power required for performing the downlink service

**EP 2 485 536 A1**

## Description

### TECHNICAL FIELD

The disclosure relates to the field of communications, and in particular to a method and a device for downlink service admission control.

### BACKGROUND

In a mobile communication system, the admission control refers to determining whether to admit a new service according to a current resource state of a cell and requirements of a service to be accessed on resources, the requirements being included in an admission request message.

In a Long Term Evolution (LTE) system, an Orthogonal Frequency Division Multiplexing (OFDM) technology is adopted for both an uplink and a downlink, and physical resources are allocated in a grid allocation manner on the uplink and the downlink. The 3GRP protocol specifies that, for a downlink service, each control channel and data channel are transmitted on a radio channel after being mapped to a resource grid based on a certain rule. Therefore, the service to be accessed in the LTE system also needs to be decomposed and mapped to the resource grid for transmission, wherein the smallest unit of the resource grid is a Resource Element (RE).

$N_{symbol}$ continuous OFDM symbols in a time domain and $N_{sc}$ subcarriers in a frequency domain constitute a Resource Block (RB), and a variety of services from a plurality of users can be transmitted on one resource grid. However, one RB can only be used by one service of one user at a certain moment. Therefore, in the LTE system, the system capacity, namely the total number of services which can be accessed and transmitted, may be limited by the number of RBs.

A configuration method is used for downlink power in the LTE system. The LTE system allocates certain power to each RE in order to ensure transmission and coverage demands. Theoretically, as long as a Media Access Control (MAC) layer adopts an appropriate scheduling method, the maximum use of the power and RBs can be ensured simultaneously, namely at the time the allocation of RBs is finished, the allocation of power is just finished, and at the time the allocation of power is finished, no RB is left either.

However, practical application is often not so ideal in an existing LTE system. The exact matching of downlink RBs and power is difficult to be achieved by the scheduling of the MAC layer, and the situation that RB resources are sufficient, but no enough power can be allocated, which results in higher bit error ratio in service transmission or results in even a transmission failure may arise.

## SUMMARY

Embodiments of the disclosure provides a method for downlink service admission control, for performing an admission judgment on a service to be accessed accurately even when scheduling of am MAC layer is insufficient, thus making the service meet transmission demands such as bit error ratio and the like after the service is admitted to the cell, increasing system stability, and ensuring the user experience at various locations of the cell.

To achieve the above purposes, the technical solution of the disclosure is realized as follows.

The disclosure provides a method for downlink service admission control, wherein the method includes:

receiving an admission request message initiated by a downlink service, wherein the admission request message includes a service transmission rate of the downlink service;

determining the number of Resource Blocks (RBs) required for performing the downlink service according to the service transmission rate of the downlink service;

determining power required for performing the downlink service according to the number of the RBs required for performing the downlink service and a radio environment of a cell when the number of remaining downlink RBs of the cell is not less than the number of the RBs required for performing the downlink service;

accessing the downlink service when remaining downlink power of the cell is not less than the power required for performing the downlink service.

The method may further include:

refusing to access the downlink service when the number of the remaining downlink RBs of the cell is less than the number of the RBs required for performing the downlink service.

The method may further include:

refusing to access the downlink service when the remaining downlink power of the cell is less than the power required for performing the downlink service.

Furthermore, the number of the RBs required for performing the downlink service may be in direct proportion to the service transmission rate of the downlink service.

Furthermore, the radio environment of the cell may at least include: a current frequency spectrum utilization rate of the cell fed back by a Media Access Control (MAC) layer, power required for a Block Error Ratio (BLER) that meets transmission quality of each RB, and a power correction value of the cell.

The disclosure further provides a device for downlink service admission control, wherein the device includes:

a receiving unit, which is configured to receive an admission request message initiated by a downlink service, wherein the admission request message includes a service transmission rate of the downlink service;

a first determining unit, which is configured to, according to the service transmission rate of the downlink service, determine the number of RBs required for performing the downlink service;

a second determining unit, which is configured to, when the first determining unit determines that the number of remaining downlink RBs of a cell is not less than the number of the RBs required for performing the downlink service, determine power required for performing the downlink service according to the number of the RBs required for performing the downlink service and a radio environment of the cell;

an access unit, which is configured to, when the second determining unit determines that remaining downlink power of the cell is not less than the power required for performing the downlink service, access the downlink service.

The device may further include:

a first refusing unit, which is configured to, when the first determining unit determines that the number of the remaining downlink RBs of the cell is less than the number of the RBs required for performing the downlink service, refuse to access the downlink service.

The device may further include:

a second refusing unit, which is configured to, when the second determining unit determines that the remaining downlink power of the cell is less than the power required for performing the downlink service, refuse to access the downlink service.

The number of the RBs required for performing the downlink service may be in direct proportion to the service transmission rate of the downlink service.

The radio environment of the cell may at least include: a current frequency spectrum utilization rate of the cell fed back by an MAC layer, power required for a BLER that meets transmission quality of each RB, and a power correction value of the cell.

In the embodiments of the disclosure, the admission request message initiated by the downlink service is received; the admission request message includes the service transmission rate of the downlink service; the number of the RBs required for performing the downlink service is determined according to the service transmission rate of the downlink service; when the number of the remaining downlink RBs of the cell is not less than the number of the RBs required for performing the downlink service, the power required for performing the downlink service is determined according to the number of the RBs required for performing the downlink service and the radio environment of the cell; and when the remaining downlink power of the cell is not less than the power required for performing the downlink service, the downlink service is accessed. It can be seen from the embodiments of the disclosure that, whether the number of the remaining downlink RBs of the cell can meet the number of the RBs required for performing the downlink service and whether the remaining downlink power of the cell can meet the power required for performing the downlink service are both taken into consideration, so that the situation that RB resources are sufficient while no enough power can be allocated, which results in higher bit error ratio in service transmission or results in even a transmission failure, can be avoided.

By the method for downlink service admission control provided by the embodiments of the disclosure, the defects of a conventional admission method which only takes RB resources into consideration are remedied, an accurate admission judgment on a service to be accessed is still ensured even when scheduling of the MAC layer is insufficient, thus ensuring the service to be capable of meeting transmission demands such as bit error ratio and the like after the service is admitted to the cell, thereby increasing system stability, and ensuring the user experience at various locations of the cell.

**BRIEF DESCRIPTION OF THE DRAWINGS**

Fig. 1 shows a specific flowchart of a method for downlink service admission control provided by an embodiment of the disclosure;

Fig. 2 shows a schematic diagram of a first structure of a device for downlink service admission control provided by an embodiment of the disclosure;

Fig. 3 shows a schematic diagram of a second structure of a device for downlink service admission control provided by an embodiment of the disclosure; and

Fig. 4 shows a schematic diagram of a third structure of a device for downlink service admission control provided by an embodiment of the disclosure.

**DETAILED DESCRIPTION**

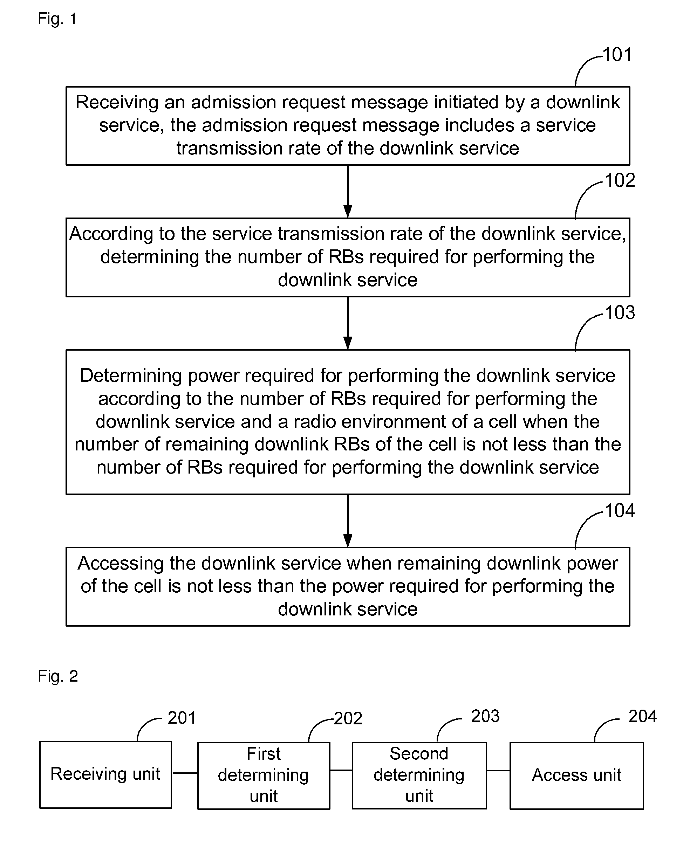

To solve the problem mentioned in the prior art that practical application is often not so ideal in an existing LTE system, the exact matching of downlink RBs and power is difficult to be achieved by the scheduling of the MAC layer, and the situation that RB resources are sufficient, but no enough power can be allocated, which results in higher bit error ratio in service transmission or results in even a transmission failure, may arise, a method for downlink service admission control is provided by an embodiment of the disclosure. The specific processing flow is as shown in Fig. 1, wherein the flow includes the following steps:

   step 101: receiving an admission request message initiated by a downlink service, wherein the admission request message includes a service transmission rate of the downlink service;

   step 102: determining the number of RBs required for performing the downlink service according to the service transmission rate of the downlink service;

   step 103: determining power required for performing the downlink service according to the number of the RBs required for performing the downlink service and a radio environment of a cell when the number of remaining downlink RBs of the cell is not less than the number of the RBs required for performing the downlink service; and

   step 104: accessing the downlink service when remaining downlink power of the cell is not less than the power required for performing the downlink service.

It can be seen from the step 102, step 103 and step 104 that when the flow as shown in Fig. 1 is implemented, it is firstly determined whether the number of the remaining downlink RBs of the cell can meet the number of the RBs required for performing the downlink service; if the number of the remaining downlink RBs can meet, namely the number of the remaining downlink RBs of the cell is not less than the number of the RBs required for performing the downlink service, then it is subsequently determined whether the remaining downlink power of the cell can meet the power required for performing the downlink service; if the remaining downlink power can meet, namely the remaining downlink power of the cell is not less than the power required for performing the downlink service, then the downlink service is accessed.

When the flow is implemented, if it is determined that the number of the remaining downlink RBs of the cell cannot meet the number of the RBs required for performing the downlink service, namely the number of the remaining downlink RBs of the cell is less than the number of the RBs required for performing the downlink service, accessing the downlink service may be directly refused without continuing to determine whether the remaining downlink power of the cell can meet the power required for performing the downlink service.

Similarly, when the flow is implemented, if it is determined that the remaining downlink power of the cell cannot meet the power required for performing the downlink service, namely the remaining downlink power of the cell is less than the power required for performing the downlink service, accessing the downlink service may also be directly refused.

It can be seen from the above specific implementation steps that, in the embodiment of the disclosure, whether the number of the remaining downlink RBs of the cell can meet the number of the RBs required for performing the downlink service and whether the remaining downlink power of the cell can meet the power required for performing the downlink service are both taken into consideration, so that the situation that the RB resources are sufficient while no enough power can be allocated, which results in higher bit error ratio in service transmission or results in even a transmission failure, can be avoided.

When the step 102 of the flow as shown in Fig. 1 is implemented, the number of RBs required for performing the downlink service is determined according to the service transmission rate of the downlink service, wherein the number of the RBs required for performing the downlink service is in direct proportion to the service transmission rate of the downlink service.

When the step 103 of the flow as shown in Fig. 1 is implemented, the power required for performing the downlink service is determined according to the radio environment of the cell and the number of the RBs required for performing the downlink service, wherein, the radio environment of the cell at least includes following parameters: a current frequency spectrum utilization rate of the cell fed back by the MAC layer, power required for a Block Error Ratio (BLER) that meets transmission quality of each RB, a power correction value of the cell, and the like. The radio environment of the cell may also include other parameters, and specific parameters are determined based on actual situation.

In the embodiments of the disclosure, the following formula can be adopted to determine the power required for performing the downlink service:

$$P\_req = f\_RB + f\_BLER + f\_Cell;$$

wherein, P_req is the power required for performing the downlink service; f_BLER is the power required for ensuring the BLER that meets transmission quality of one RB in the cell; f_Cell is the power correction value relevant to the radio environment of the cell; f_RB is the number of RBs for the service transmitted on the downlink.

The disclosure will be illustrated in conjunction with several specific examples.

Embodiment 1

It is assumed that a cell is a macro cell, a radio environment is a general city, a cell bandwidth is 10 MHz, a radius is 600m, downlink transmitting power is 40 dBm, a carrier frequency of 2 GHz is used, height between an antenna and a terminal is 15m, transmission is performed by a single antenna, and an average downlink modulation and coding rate of the cell is 0.236. A service to be accessed is a Voice on Internet Protocol (VoIP) service of 12.8 kbps. The number of current remaining RBs of the cell is 6, remaining power P_remain is 31 dBm. In this embodiment, the number of RBs required for performing the downlink service is called N_RB in order to facilitate the subsequent description.

In this embodiment, according to the rate of the service to be accessed, the number of RBs required for transmitting the service on the downlink within 1 ms is determined to be: N_RB = 0.24; since 0.24 < 6, the downlink has sufficient RBs to transmit the downlink service.

The power required for transmitting the service on the downlink is estimated according to the previously mentioned formula, and the specific calculation is as follows:

$$P\_req = f\_RB + f\_BLER + f\_Cell;$$

$$F\_RB = 10 * lg(N\_RB) = -6.1979;$$

f_BLER = SINR - f_SINR = -3.63; wherein, the Signal to Interference and Noise Ratio (SINR) is an SINR value required for ensuring data to meet a designated BLER at a cell edge when the current average modulation and coding manner is adopted in the cell; f_SINR is power required to be transmitted for ensuring the SINR value; f_Cell = -36.17;

it can be learnt that the power required by the service to be accessed on the downlink is P_req = f_RB + f_BLER + f_Cell = -6.1979 - 3.63 - 36.17 = -33.6021 dBm.

Since P_req < P_remain, the downlink has sufficient power to transmit the downlink service.

It can be determined from the above data that the cell can access the downlink service.

Embodiment 2

It is assumed that a basic environment of a cell is the same as the basic environment in embodiment 1; a service to be accessed is a service of 128 kbps; the number of current remaining RBs of the cell is 2, and remaining downlink power is 26dBm.

In this embodiment, according to the rate of the service to be accessed, the number of RBs required for transmitting the service on the downlink within 1 ms is determined to be: N_RB = 4.74; since 4.74 > 2, the downlink does not have sufficient RBs to transmit this service. So, the cell refuses to admit the downlink service to the cell, and a power-based judgment is not needed either.

Embodiment 3

It is assumed that a cell is a macro cell, a radio environment is a suburb, a cell bandwidth is 10 MHz, a radius is 1500m, downlink transmitting power is 40 dBm, a carrier frequency of 2 GHz is used, height between an antenna and a terminal is 40m, transmission is performed by a single antenna, and an average downlink modulation and coding rate of the cell is 0.602. A service to be accessed is a service of 64 kbps. The number of current remaining RBs of the cell is 3, remaining power P_remain is 26 dBm.

In this embodiment, according to the rate of the service to be accessed, the number of RBs required for transmitting the service on the downlink within 1 ms is determined to be: N_RB = 2.57; since 2.57 < 3, the downlink has sufficient RBs to transmit the service.

The power required for transmitting the service on the downlink is estimated according to the previously mentioned formula, and the specific calculation is as follows:

$$P\_req = f\_RB + f\_BLER + f\_Cell;$$

$$F\_RB = 10 * lg(N\_RB) = 3.74;$$

f_BLER = SINR - f_SINR = 3.69; wherein, SINR is an SINR value required for ensuring data to meet a designated BLER at a cell edge when the current average modulation and coding manner is adopted in the cell; f_SINR is the power required to be transmitted for ensuring the SINR value; f_Cell = 21.5;

it can be learnt that the power required by the service to be accessed on the downlink is P_req = f_RB + f_BLER + f_Cell = 28.93 dBm.

Since P_req > P_remain, the downlink does not have sufficient power to transmit this service.

It can be determined from the above data that the cell cannot admit the downlink service to the cell, so it refuses the admission request.

It can be seen from the above three embodiments that, the method for downlink service admission control provided by the embodiments of the disclosure is applied to various radio environments, thus being capable of ensuring basic quality demands on service transmission in the cell, and being beneficial to improving the user experience.

Based on the same inventive concept, embodiments of the disclosure further provides a device for downlink service admission control, and the specific structure of the device is as shown in Fig. 2, including:

a receiving unit 201, which is configured to receive an admission request message initiated by a downlink service, wherein the admission request message includes a service transmission rate of the downlink service;

a first determining unit 202, which is configured to, according to the service transmission rate of the downlink service, determine the number of RBs required for performing the downlink service;

wherein, the number of the RBs required for performing the downlink service is in direct proportion to the service transmission rate of the downlink service;

a second determining unit 203, which is configured to, when the first determining unit 202 determines that the number of remaining downlink RBs of a cell is not less than the number of the RBs required for performing the downlink service, determine power required for performing the downlink service according to the number of the RBs required for performing the downlink service and a radio environment of the cell;

wherein, the radio environment of the cell at least includes following parameters: a current frequency spectrum utilization rate of the cell fed back by an MAC layer, power required for a BLER that meets transmission quality of each RB, and a power correction value of the cell;

an access unit 204, which is configured to, when the second determining unit 203 determines that the remaining downlink power of the cell is not less than the power required for performing the downlink service, access the downlink service.

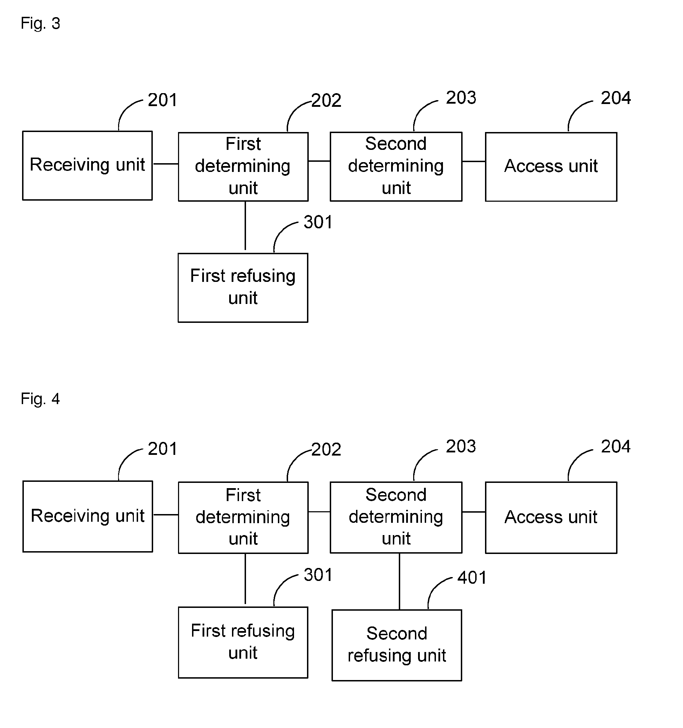

In one embodiment, as shown in Fig. 3, the device for downlink service admission control may further include:

a first refusing unit 301, which is configured to, when the first determining unit 202 determines that the number of the remaining downlink RBs of the cell is less than the number of the RBs required for performing the downlink service, refuse to access the downlink service.

In one embodiment, as shown in Fig. 4, the device for downlink service admission control may further include:

a second refusing unit 401, which is configured to, when the second determining unit 203 determines that the remaining downlink power of the cell is less than the power required for performing the downlink service, refuse to access the downlink service.

In the embodiments of the disclosure, an admission request message initiated by a downlink service is received; the admission request message includes a service transmission rate of the downlink service; the number of RBs required for performing the downlink service is determined according to the service transmission rate of the downlink service; when the number of remaining downlink RBs of the cell is not less than the number of the RBs required for performing the downlink service, power required for performing the downlink service is determined according to the number of the RBs required for performing the downlink service and a radio environment of the cell; and when remaining downlink power of the cell is not less than the power required for performing the downlink service, the downlink service is accessed. It can be seen from the embodiments of the disclosure that, whether the number of the remaining downlink RBs of the cell can meet the number of the RBs required for performing the downlink service and whether the remaining downlink power of the cell can meet the power required for performing the downlink service are both taken into consideration, so that the situation that RB resources are sufficient while no enough power can be allocated, which results in higher bit error ratio in service transmission or results in even a transmission failure, can be avoided.

By the method for downlink service admission control provided by the embodiments of the disclosure, defects of a conventional admission method which only takes RB resources into consideration are remedied, and an accurate admission judgment on a service to be accessed is ensured even when scheduling of an MAC layer is insufficient, thus ensuring that the service can meet transmission demands such as bit error ratio and the like after the service is admitted to the cell, increasing system stability, and ensuring the user experience at various locations of the cell.

Furthermore, the method for downlink service admission control provided by the embodiments of the disclosure is applied to various radio environments, can ensure basic quality demands on service transmission in a cell, and is beneficial to improving the user experience.

Obviously, those skilled in the art can make various modifications and transformations to the disclosure without departing from the spirit and scope of the disclosure. In this way, if these modifications and transformations of the disclosure fall within the scope of the claims of the disclosure and its equivalent technology scope, these modifications and transformations are intended to be included in the disclosure.

## Claims

1. A method for downlink service admission control, comprising:

   receiving an admission request message initiated by a downlink service, wherein the admission request message includes a service transmission rate of the downlink service; determining the number of Resource Blocks (RBs) required for performing the downlink service according to the service transmission rate of the downlink service; determining power required for performing the downlink service according to the number of the RBs required for performing the downlink service and a radio environment of a cell when the number of remaining downlink RBs of the cell is not less than the number of the RBs required for performing the downlink service; and accessing the downlink service when remaining downlink power of the cell is not less than the power required for performing the downlink service.

2. The method according to claim 1, further comprising:

   refusing to access the downlink service when the number of the remaining downlink RBs of the cell is less than the number of the RBs required for performing the downlink service.

3. The method according to claim 1, further comprising:

   refusing to access the downlink service when the remaining downlink power of the cell is less than the power required for performing the downlink service.

4. The method according to any one of claims 1 to 3, wherein the number of the RBs required for performing the downlink service is in direct proportion to the service transmission rate of the downlink service.

5. The method according to any one of claims 1 to 3, wherein, the radio environment of the cell at least comprises: a current frequency spectrum utilization rate of the cell fed back by a Media Access Control (MAC) layer, power required for a Block Error Ratio (BLER) that meets transmission quality of each RB, and a power correction value of the cell.

6. A device for downlink service admission control, comprising:

   a receiving unit, which is configured to receive an admission request message initiated by a downlink service, wherein the admission request message includes a service transmission rate of the downlink service; a first determining unit, which is configured to, according to the service transmission rate of the downlink service, determine the number of RBs required for performing the downlink service; a second determining unit, which is configured to, when the first determining unit determines that the number of remaining downlink RBs of a cell is not less than the number of the RBs required for performing the downlink service, determine power required for performing the downlink service according to the number of the RBs required for performing the downlink service and a radio environment of the cell; an access unit, which is configured to, when the second determining unit determines that remaining downlink power of the cell is not less than the power required for performing the downlink service, access the downlink service.

7. The device according to claim 6, further comprising:

   a first refusing unit, which is configured to, when the first determining unit determines that the number of the remaining downlink RBs of the cell is less than the number of the RBs required for performing the downlink service, refuse to access the downlink service.

8. The device according to claim 6, further comprising:

   a second refusing unit, which is configured to, when the second determining unit determines that the remaining downlink power of the cell is less than the power required for performing the downlink service, refuse to access the downlink service.

9. The device according to any one of claims 6 to 8, wherein the number of the RBs required for performing the downlink service is in direct proportion to the service transmission rate of the downlink service.

10. The device according to any one of claims 6 to 8, wherein the radio environment of the cell at least comprises: a current frequency spectrum utilization rate of the cell fed back by an MAC layer, power required for a BLER that meets transmission quality of each RB, and a power correction value of the cell.

Fig. 1

101

Receiving an admission request message initiated by a downlink service, the admission request message includes a service transmission rate of the downlink service

102

According to the service transmission rate of the downlink service, determining the number of RBs required for performing the downlink service

103

Determining power required for performing the downlink service according to the number of RBs required for performing the downlink service and a radio environment of a cell when the number of remaining downlink RBs of the cell is not less than the number of RBs required for performing the downlink service

104

Accessing the downlink service when remaining downlink power of the cell is not less than the power required for performing the downlink service

Fig. 2

| 201 | | 202 | | 203 | | 204 |
|---|---|---|---|---|---|---|
| Receiving unit | — | First determining unit | — | Second determining unit | — | Access unit |

Fig. 3

```
 ┌─201            ┌─202           ┌─203          ┌─204
┌──────────────┐ ┌──────────────┐ ┌──────────────┐ ┌──────────────┐
│              │ │    First     │ │   Second     │ │              │
│Receiving unit│─│ determining  │─│ determining  │─│ Access unit  │
│              │ │    unit      │ │    unit      │ │              │
└──────────────┘ └──────────────┘ └──────────────┘ └──────────────┘
                        │  ┌─301
                 ┌──────────────┐
                 │ First refusing│
                 │    unit      │
                 └──────────────┘
```

Fig. 4

```
 ┌─201            ┌─202           ┌─203          ┌─204
┌──────────────┐ ┌──────────────┐ ┌──────────────┐ ┌──────────────┐
│              │ │    First     │ │   Second     │ │              │
│Receiving unit│─│ determining  │─│ determining  │─│ Access unit  │
│              │ │    unit      │ │    unit      │ │              │
└──────────────┘ └──────────────┘ └──────────────┘ └──────────────┘
                        │  ┌─301         │  ┌─401
                 ┌──────────────┐ ┌──────────────┐
                 │ First refusing│ │   Second     │
                 │    unit      │ │ refusing unit │
                 └──────────────┘ └──────────────┘
```

# INTERNATIONAL SEARCH REPORT

| | International application No. |
|---|---|
| | PCT/CN2010/073975 |

### A. CLASSIFICATION OF SUBJECT MATTER

H04W48/00(2009.01)i

According to International Patent Classification (IPC) or to both national classification and IPC

### B. FIELDS SEARCHED

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNPAT,CNKI,WPI,EPODOC: access, admission, control+, judg+, downlink, service, business, rate, ratio, power, resource w block?

### C. DOCUMENTS CONSIDERED TO BE RELEVANT

| Category* | Citation of document, with indication, where appropriate, of the relevant passages | Relevant to claim No. |
|---|---|---|
| A | CN1870620A(HUAWEI TECHLOGIES CO LTD)29 Nov. 2006(29.11.2006) description page 6 line 2 to page 10 line 8 | 1-10 |
| A | CN1819696A(SHANGHAI BELL ALCATEL CO LTD)16 Aug. 2006 (16.08.2006) the whole document | 1-10 |
| A | WO2006094429A1(ZTE CORP) 14 Sep. 2006(14.09.2006) the whole document | 1-10 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 20 Aug. 2010 (20.08.2010) | **16 Sep. 2010 (16.09.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LI, Xiao Telephone No. (86-10)62411368 |
|---|---|

Form PCT/ISA /210 (second sheet) (July 2009)

## INTERNATIONAL SEARCH REPORT
### Information on patent family members

| | International application No. |
|---|---|
| | PCT/CN2010/073975 |

| Patent Documents referred in the Report | Publication Date | Patent Family | Publication Date |
|---|---|---|---|
| CN1870620A | 29.11.2006 | CN100550885C | 14.10.2009 |
| CN1819696A | 16.08.2006 | CN100515114C | 15.07.2009 |
| | | EP1689131A1 | 09.08.2006 |
| | | EP1689131B1 | 30.07.2008 |
| | | US2006176814A1 | 10.08.2006 |
| | | US7639610B2 | 29.12.2009 |
| | | AT403312T | 15.08.2008 |
| | | DE602006001961E | 11.09.2008 |
| WO2006094429A1 | 14.09.2006 | None | |

Form PCT/ISA /210 (patent family annex) (July 2009)